# EUROPEAN PATENT APPLICATION

(11) **EP 2 045 712 A1**
(43) Date of publication of application: **08.04.2009**
(21) Application number: 08165594.6
(22) Date of filing: 01.10.2008
(51) Int. Cl.: G06F 3/12

(54) **Approach for generating print data using a multi-document print driver**

(30) Priority: 02.10.2007 US 866318
(71) Applicant: Ricoh Company, Ltd., Tokyo 143-8555 (JP)
(72) Inventor: Selvaraj, Senthil K. c/o Ricoh Americas Corporation, Cupertino CA 95014 (US)
(74) Representative: Schwabe - Sandmair - Marx

(57) **Abstract**

A multi-document print driver (114) allows a user to combine and edit application data containing content generated by multiple application programs in different formats. The multi-document print driver (114) processes the application data from the application programs and generates a single print job that includes the content from the multiple applications and conforms to a common data format. A user may then edit the print job by re-arranging and/or deleting the content from the multiple applications. The multi-document print driver (114) converts the print job from the common data format into a format that is compatible with a target printing device (104) and sends the converted print job to the target printing device (104) for printing. Thus, the final print job sent to the target printing device (104) may include the content from the multiple applications according to an order and arrangement designated by the user and does not include the content that the user deleted.

## Description

### FIELD OF THE INVENTION

This invention relates generally to printing, and more specifically, to an approach for generating print data using a multi-document print driver.

### BACKGROUND OF THE INVENTION

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Conventional printing approaches allow users to print one document at a time from an application. For example, a user creates a word processing document using a word processor and then instructs the word processor to print the electronic document to a printing device, such as a dedicated printer or a multi-function peripheral (MFP), that may perform several functions, such as printing, scanning, facsimile services, etc. As another example, a user may create a presentation document, such as a power point presentation, using presentation package software, and then instruct the presentation package software to print the presentation document. As yet another example, a user may create an HTML document using an editor and then instruct the editor to print the HTML document.

These conventional approaches generally work well when the final printed document can be created from a single application program. They are less convenient however, in situations where a user wants to create a printed document that includes content from multiple documents. In these situations, a user must print each document and then extract and combine the content of interest. For example, suppose that a user wants to print a project that includes several pages of a word processing document, several pages of a presentation package document, e.g., power point, and several pages of an HTML document. Using conventional printing methods, the user must separately print the word processing document, the presentation package document and the HTML document, extract the pages of interest (or discard the pages that will not be used) and combine the pages of interest. This approach is inconvenient, wasteful and can involve a considerable amount of work, especially in a production printing environment where the number and size of documents printed may be quite large. In view of the foregoing, an approach for generating print data that does not suffer from the problems of conventional approaches is desirable.

### SUMMARY OF THE INVENTION

An approach is provided for generating print data using a multi-document print driver that allows a user to combine and edit application data containing content generated by multiple application programs in different formats. The multi-document print driver processes the application data from the application programs in the various formats supported by the application programs and generates a single print job that includes the content from the multiple applications and conforms to a common data format. A user may then edit the print job by re-arranging and/or deleting the content from the multiple applications. The multi-document print driver converts the print job from the common data format into a format that is compatible with a target printing device and sends the converted print job to the target printing device for printing. Thus, the final print job sent to the target printing device may include the content from the multiple applications according to an order and arrangement designated by the user. Furthermore, the final print job does not include the content that the user deleted.

According to one embodiment of the invention, a computer-implemented method is provided for generating print data. According to the computer-implemented method, a print driver retrieves first application data generated by a first application program, wherein the first application data includes first content and the first application data conforms to a first format supported by the first application program. The print driver processes the first application data and generates first processed application data that conforms to a common data format. The print driver retrieves second application data generated by a second application program, wherein the second application data includes second content and the second application data conforms to a second format supported by the second application program. The print driver processes the second application data and generates second processed application data that conforms to the common data format. The print driver causes the first processed application data and the second processed application data to be presented to a user via a graphical user interface and allows a user to create edited processed application data that includes one or more portions of the first processed application data and one or more portions of the second processed application data. This includes allowing the user to designate an order for the first content and the second content, and delete one or more portions of the first content and the second content. The print driver processes the edited processed application data and generates print data that conforms to a format supported by a print device.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a block diagram that depicts an arrangement for generating print data using a multi-document print driver according to one embodiment of the invention;
FIG. 2 depicts an example multi-document print driver according to one embodiment of the invention;
FIG. 3 is a flow diagram that depicts an approach for generating print data using a multi-document print driver according to one embodiment of the invention;
FIG. 4 is a flow diagram that depicts an approach for allowing a user to edit and manage processed application data, according to one embodiment of the invention;
FIG. 5 depicts an example user interface screen for editing and managing processed application data, according to one embodiment of the invention;
FIG. 6 is a flow diagram that depicts printing processed application data in the common data format according to one embodiment of the invention; and
FIG. 7 is a block diagram of a computer system on which embodiments of the invention may be implemented.

### DETAILED DESCRIPTION OF THE PRESENT INVENTION

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. ARCHITECTURE OVERVIEW
III. GENERATING PROCESSED APPLICATION DATA IN A COMMON DATA FORMAT
IV. EDITING AND MANAGING PROCESSED APPLICATION DATA IN THE COMMON DATA FORMAT
V. PRINTING APPLICATION DATA IN THE COMMON DATA FORMAT
VI. IMPLEMENTATION MECHANISMS

### I. OVERVIEW

An approach is provided for generating print data using a multi-document print driver that allows a user to combine and edit application data containing content generated by multiple application programs in different formats. The multi-document print driver processes the application data from the application programs in the various formats supported by the application programs and generates a single print job that includes the content from the multiple applications and conforms to a common data format. A user may then edit the print job by re-arranging and/or deleting the content from the multiple applications. The multi-document print driver converts the print job from the common data format into a format that is compatible with a target printing device and sends the converted print job to the target printing device for printing. Thus, the final print job sent to the target printing device may include the content from the multiple applications according to an order and arrangement designated by the user. Furthermore, the final print job does not include the content that the user deleted.

The approach is very convenient and efficient in situations where a user wants to include in a print job only a portion of content from one or more applications so that the other content does not need to be printed. Further, the ability for the user to arrange the content in the order the user wants it printed before it is printed allows the user to avoid having to manually arrange and assemble a final printed document after it has been printed. The approach may also include the use of digital rights management to manage access to the application data stored in the common data format.

### II. ARCHITECTURE OVERVIEW

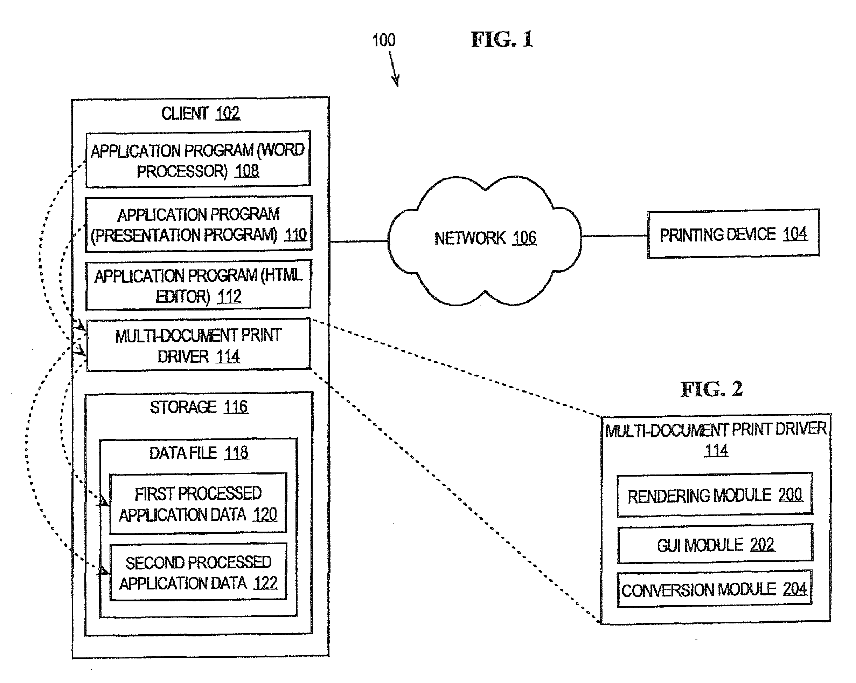

FIG. 1 is a block diagram that depicts an arrangement 100 for generating print data using a multi-document print driver according to one embodiment of the invention. Arrangement 100 includes a client 102 and a printing device 104 communicatively coupled via a network 106. Client 102 may be any type of client device and the invention is not limited to any particular type of client 102. Examples of client 102 include, without limitation, a personal computer, a workstation, a personal digital assistant, a cellular telephone, or any other type of mobile device. Printing device 104 may be any type of device that is capable of processing print data and generating a printed version of an electronic document contained in the print data. Examples of printing device 104 include, without limitation, a printer and an MFP. Network 106 may be implemented by any medium or mechanism that provides for the exchange of data between client 102 and printing device 104. Examples of network 106 include, without limitation, a network such as a Local Area Network (LAN), Wide Area Network (WAN), Ethernet or the Internet, or one or more terrestrial, satellite or wireless links.

In arrangement 100, client 102 includes application programs 108, 110, 112 that may be any type of application programs. Application programs 108, 110, 112 are described hereinafter in the context of a word processor 108, a presentation program 110 and an HTML editor 112 for purposes of explanation, but application programs 108, 110, 112 may be implemented as any type of application programs and are not limited to this context.

According to one embodiment of the invention, client 102 includes a multi-document print driver 114. Conventional print drivers translate application data generated by an application program in a format supported by the application program into print data that is in a format supported by a printing device to which the print data is intended to be sent for processing. Multi-document print driver 114 may, or may not, include this functionality, depending upon a particular implementation. According to one embodiment of the invention, multi-document print driver 114 is configured to process application data generated by application programs 108, 110, 112 that conform to native formats of application programs 108, 110, 112 and generate processed application data that conforms to a common data format. Multi-document print driver 114 is further configured to allow a user to view and edit the content contained in the processed application data a user via a graphical user interface. As described in more detail hereinafter, a wide variety of editing functions may be provided to a user. According to one embodiment of the invention, a user may arrange and delete content. According to one embodiment of the invention, multi-document print driver 114 is further configured to process the processed application data and generate print data, e.g., a print job, that conforms to a format supported by an intended target printing device.

Client 102 also includes storage 116 that may be implemented by volatile storage, non-volatile storage or any combination of volatile and non-volatile storage, depending upon a particular implementation. The use of storage 116 to store processed application data is described in more detail hereinafter.

FIG. 2 depicts an example multi-document print driver 114 according to one embodiment of the invention. In this example, multi-document print driver 114 includes a rendering module 200, a graphical user interface (GUI) module 202 and a conversion module 204. Rendering module 200, GUI module 202 and conversion module 204 (and any other components of multi-document print driver 114) may be implemented in computer hardware, computer software, or any combination of computer hardware and software and the invention is not limited to any particular embodiment. According to one embodiment of the invention, multi-document print driver 114 is installed on client 102 as a print driver for a printing device referred to herein as the "multi-document printer."

Rendering module 200 is configured to process application data generated by application programs 108, 110, 112 that conforms to a native format of application programs 108, 110, 112 and generate processed application data that conforms to a common data format. GUI module 202 is configured to generate a graphical user interface that is displayed on client 102. The graphical user interface generated by GUI module 202 allows a user to arrange and delete the content contained in the processed application data. Conversion module 204 is configured to process the processed application data in the common data format after it has been edited by the user and generate print data that conforms to a format supported by a target printing device, as described in more detail hereinafter.

### III. GENERATING PROCESSED APPLICATION DATA IN A COMMON DATA FORMAT

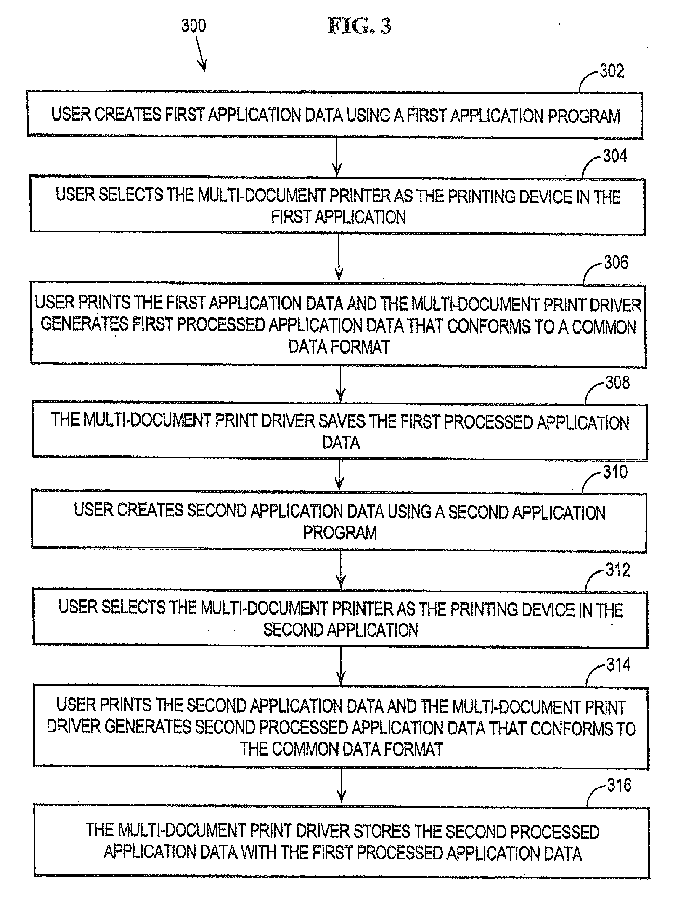

FIG. 3 is a flow diagram that depicts an approach for generating processed application data in a common data format using a multi-document print driver according to one embodiment of the invention. Although flow diagram 300 depicts a particular set of steps in a particular order, other implementations may use fewer or more steps, in the same or different order, than those depicted in FIG. 3. In step 302, a user generates first application data using a first application program. The first application data conforms to a first format supported by the first application program and contains first content. For example, a user may use word processor 108 to generate a word processing document that contains text and/or graphic data in a first format supported by the word processor.

In step 304, the user selects the multi-document printer as the printing device in the first application. For example, this may involve a user accessing a pull-down menu within word processor 108 by via the <File><Print> menu options and then selecting the multi-document printer as the current printer. In step 306, the user prints the first application data to the multi-document printer, instead of a printing device that the user would ordinarily use to print the first application data. In response to the user selecting to print the first application data to the multi-document printer, the multi-document print driver 114 processes the first application data and generates first processed application data 120 that conforms to a common data format. According to one embodiment of the invention, rendering module 200 generates the first processed application data. The common data format may be any data format depending upon the particular implementation and the invention is not limited to any particular common data format. For example, the common data format may be the XPS format. In this example, the rendering module 200 of multi-document print driver 114 converts the first application data from the first format supported by word processor 108 into the XPS format. Other examples of common data format include markup languages, such as XML, and text.

In step 308, the multi-document print driver 114 saves the first processed application data 120. The first processed application data 120 may be stored locally on client 102, or at another location, depending upon a particular implementation. For example, FIG. 1 depicts multi-document print driver 114 creating, on storage 116, a data file 118 in XPS format that contains the first processed application data 120. According to one embodiment of the invention, multi-document print driver 114 determines whether an existing data file 118 already exists. If data file 118 does not already exist, then multi-document print driver 114 creates the data file 118. If data file 118 does already exist, then multi-document print driver 114 appends the first processed application data 120 to the existing data file 118. Thus, instead of converting the first application data directly into a format supported by a target printing device as is done with conventional print drivers, multi-document print driver 114 converts the first application data into the common data format and saves the data.

In step 310, a user generates second application data using a second application program. The second application data conforms to a second format supported by the second application program and contains second content. For example, a user may use presentation program 110 to generate a presentation document that contains text and/or graphic data.

In step 312, the user selects the multi-document printer as the printing device in the second application. In step 314, the user prints the second application data to the multi-document printer and the multi-document print driver 114 generates second processed application data that confirms to the common data format.

In step 316, the multi-document print driver 114 saves the second processed application data with the first processed application data. As with the first processed application data, the second processed application data may be stored locally on client 102, or at another location, depending upon a particular implementation. Since the data file 118 already exists and contains the first processed application data, the multi-document print driver 114 appends the second processed application data 122 to the data file 118. The processed application data contained in data file 118 is now ready to be edited by the user, as described hereinafter.

Although the prior example has been described in the context of using two application programs and processing first and second application data generated by those application programs, the invention is not limited to only two application programs two types of application data, and the multi-document print driver 114 may be used to process any type and amount of application data generated by any number and types of application programs.

### IV. EDITING AND MANAGING PROCESSED APPLICATION DATA IN THE COMMON DATA FORMAT

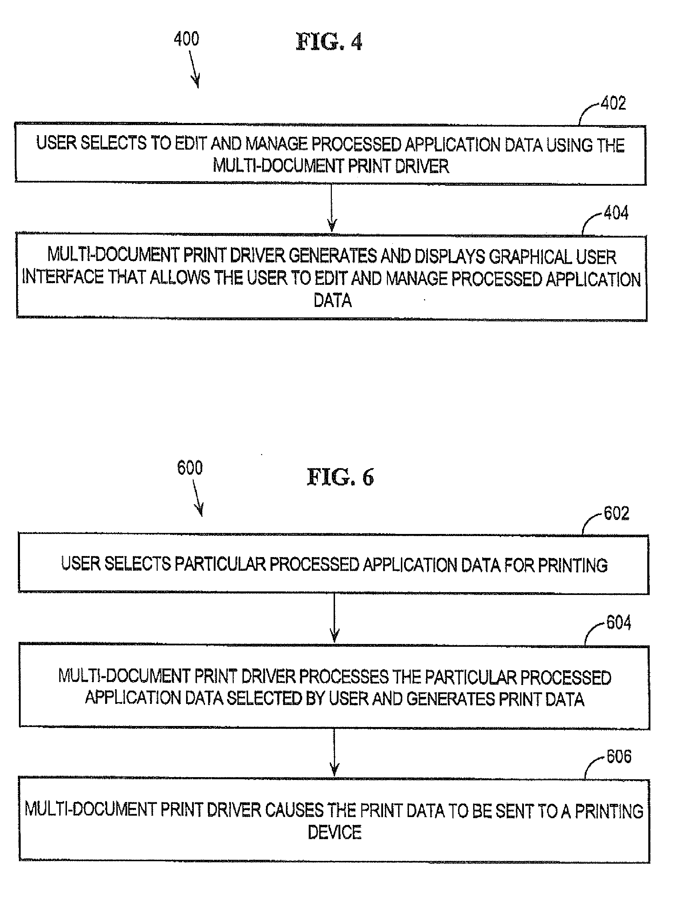

Once processed application data has been stored in the common data format by the multi-document print driver 114, the multi-document print driver 114 allows the content contained in the processed application data to be edited and managed by a user. FIG. 4 is a flow diagram 400 that depicts an approach for allowing a user to edit and manage processed application data, according to one embodiment of the invention.

In step 402, a user accesses a graphical user interface that allows editing and management of processed application data. The user interface screen may be accessed using a wide variety of approaches, depending upon a particular implementation. For example, the user interface screen may be accessed from an application via the properties or preferences screen for the multi-document printer, e.g., via the <File><Print><Properties or Preferences> screen. As another example, the user interface screen may be accessed from an operating system via the printing preferences for the multi-document printer. One example approach for accessing the printing preferences is to view the installed printers, select the multi-document printer and access the printing preferences for the multi-document printer. Accessing the printing preferences for the multi-document printer will cause the GUI module 202 in the multi-document print driver 114 to generate and display the graphical user interface.

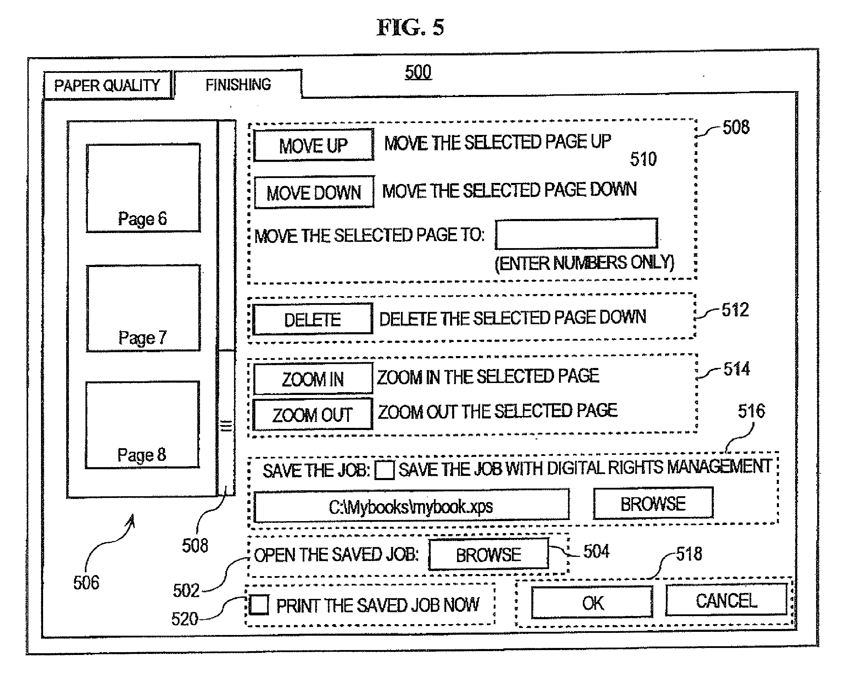

In step 404, multi-document print driver 114 generates and displays a graphical user interface that allows a user to edit and manage processed application data. FIG. 5 depicts an example user interface screen 500 for editing and managing processed application data, according to one embodiment of the invention. User interface screen 500 provides an example embodiment of a graphical user interface that may be generated by multi-document print driver 114 for allowing a user to edit and manage processed application data and the invention is not limited to this particular example. A wide variety of editing and management functions may be provided to the user via graphical user interface screen, depending upon a particular implementation. Example functions include, without limitation, retrieving processed application data, editing processed application data, saving edited processed application data and saving edited processed application data using digital rights management.

In FIG. 5, graphical user interface screen 500 includes a set of user interface controls 502 for retrieving processed application data. The processed application data may be retrieved from local storage 116, or from a remote location by using a browse control 504, that allows a user to browse for stored processed application data. Multi-document print driver 114 displays the retrieved processed application data on graphical user interface screen 500. In the present example, the retrieved processed application data is displayed in a display area 506 on graphical user interface screen 500. The retrieved processed application data may be displayed in different formats and styles, depending upon a particular implementation. For example, according to one embodiment of the invention, retrieved processed application data is displayed in display area 506 in a so called WYSIWYG or preview format to allow the user to see how the processed application data will look when actually printed. Other formats may be used, for example, a normal view or Web layout view. In the present example, the word processing document created by the user and represented by the first processed application data 120 is displayed starting at the top of display area 506, followed by the presentation document represented by the second processed application data 122. Graphical user interface screen 500 includes a set of user interface controls, for example a slider 508, for navigating the retrieved processed application data.

Graphical user interface screen 500 includes user interface controls for editing the retrieved processed application data. The particular user interface controls provided for editing processed application data may vary depending upon a particular implementation and the invention is not limited to any particular set of user interface controls. In the example implementation depicted in FIG. 5, user interface controls include controls 508 for moving selected content. For example, a user may use a pointing device such as a mouse to select particular content, such as a particular page of a word processing document, and then move the particular page to another location within all the content displayed in display area 506. The user interface controls may also include one or more delete controls 512 for deleting selected content. As another example, user interface controls may include controls 514 for zooming in or zooming out selected content to change the viewing size of the selected content to better enable a user to determine whether selected content should be moved or deleted.

User interface controls also include controls 516 for saving edited processed application data. Controls 516 allow a user to specify a filename and location for storing the edited processed application data and also allow a user to use a browse function to identify a location to store the edited processed application data. For example in FIG. 5 the location where the edited processed application data is to be saved is specified as "C:\Mybooks\mybook.xps. Edited processed application data may be stored to other locations, such as a server.

According to one embodiment of the invention, user interface controls 516 include controls for saving edited processed application data using digital rights management. This may include using a policy to control access to saved edited processed application data. For example, by checking the checkbox depicted in FIG. 5 within controls 516 that indicates that the job will be saved with digital rights management, the user may be queried to select a policy to be applied to the processed application data being saved. As another example, a user may be given an opportunity to define a policy to be applied to the processed application data being saved. Controls 518 allow a user to confirm or cancel the operations specified by the user via graphical user interface screen 500.

Consider the following example. Suppose that a user generates a word processing document that contains six pages of text. The user prints the word processing document and the multi-document print driver 114 converts the word processing document to the common data format, such as XPS, and saves the word processing document in a data file. The user then generates a presentation document that includes eight slides. The user prints the presentation document and the multi-document printer 114 coverts the presentation document to the common data format and appends the presentation document to the data file that contains the word processing document. The user then accesses the editing functions provided via the GUT module 202 of the multi-function print driver 114 presents the word processing document and the presentation document for editing on graphical user interface screen 500. In this example the six pages of the word processing document are presented first in display area 506, since the word processing document was printed to the print driver 114 first, followed by the eight slides of the presentation document. The user is then able to navigate through the pages and slides using the slider control 508 and select and relocate pages and slides using the controls 510 and delete pages and slides using the delete controls 512. For example, the user may elect to delete pages 2-4 and 6 of the word processing document, retaining only pages 1 and 5. The user may also elect to delete slides 1, 2 and 5-7 of the presentation document, retaining only slides 3, 4 and 8. The user accomplishes this by selecting each page and slide to be deleted and then uses the delete controls 512 to delete the selected pages and slides. When the user has deleted these pages and slides, then the user may save the edited processed application using the user interface controls 516, with or without digital rights management, as previously described herein. The user may also print the edited application data using the print control 520. In response to electing to print the edited application data, multi-document print driver 114 converts the edited application data from the common data format to a format supported by the target printing device. The multi-document print driver 114 then sends the formatted data to the target printing device for printing. In the present example, pages 1 and 5 of the word processing document followed by slides 3, 4 and 8 of the presentation document are printed. The pages and slides deleted by the user are not printed.

### V. PRINTING APPLICATION DATA IN THE COMMON DATA FORMAT

Processed application data stored in the common data format may be retrieved for printing by users. FIG. 6 is a flow diagram 600 that depicts printing processed application data in the common data format according to one embodiment of the invention. Starting in step 602, the user selects particular processed application data for printing. This may be performed, for example, by a user using the user interface control 502 of FIG. 5 to browse for and open previously saved processed application data. Once the saved processed application data has been opened via user interface screen 500, a user may elect to have the retrieved processed application data printed. In the example user interface screen 500, a user interface control 520 in the form of a checkbox is provided to specify printing of retrieved processed application data. The user checks the checkbox and then selects the confirm button within controls 518 to initiate printing of the processed application data.

In step 604, the multi-document print driver 114 processes the retrieved processed application data and generates print data that conforms to a format supported by a printing device intended to process the processed application data. This may include translating the processed application data from the common data format into print data that conforms to a particular format supported by a printing device. For example, conversion module 204 may translate application data from XPS format into PCL, Postscript or PPL print data. Preparing the print data for a target printing device does not have to include translating the processed application data into another format. For example, in situations where a target printing device supports the common data format, such as XPS, then the processed application data does not need to be translated. In this situation, conversion module 204 may do little or no processing of the processed application data to prepare the data to be processed by the target printing device.

In step 606, multi-document print driver 114 causes the print data to be sent to a printing device for processing. For example, suppose that the user selected printing device 104 as the target printing device. Multi-document print driver 114 causes the print data to be sent to printing device 104. Multi-document print driver 114 may invoke one or more other services or modules on client 102 to cause the print data to be transmitted to printing device 104, depending upon a particular implementation.

According to one embodiment of the invention, when a user selects to print edited processed application data, GUI module 202 causes one or more user interface objects to be displayed that list the printing devices that are currently installed on client 102. The one or more user interface objects may be any type of user interface objects, for example, lists, drop-down menus, etc. In response to a user selecting a particular printing device, the multi-document print driver 114 invokes the print driver associated with the particular printing device to process the edited processed application data. The multi-document print driver 114 may also convert the edited processed application data from the common data format into a format compatible with the print driver associated with the particular printing device selected by the user. The print driver converts the edited processed application data into print data that conforms to a format supported by the particular printing device and sends the print data to the particular printing device. Thus, using this approach, two different print drivers are used. The multi-document print driver is used to process application data in the native formats of the applications and generate processed application data in the common data format. The multi-document print driver also allows a user to edit the processed application data in the common data format and created edited processed application data. The other print driver is used to convert the edited processed application data from the common data format into print data in the particular format supported by the selected printing device. The other print driver also sends the print data to the selected printing device.

### VI. IMPLEMENTATION MECHANISMS

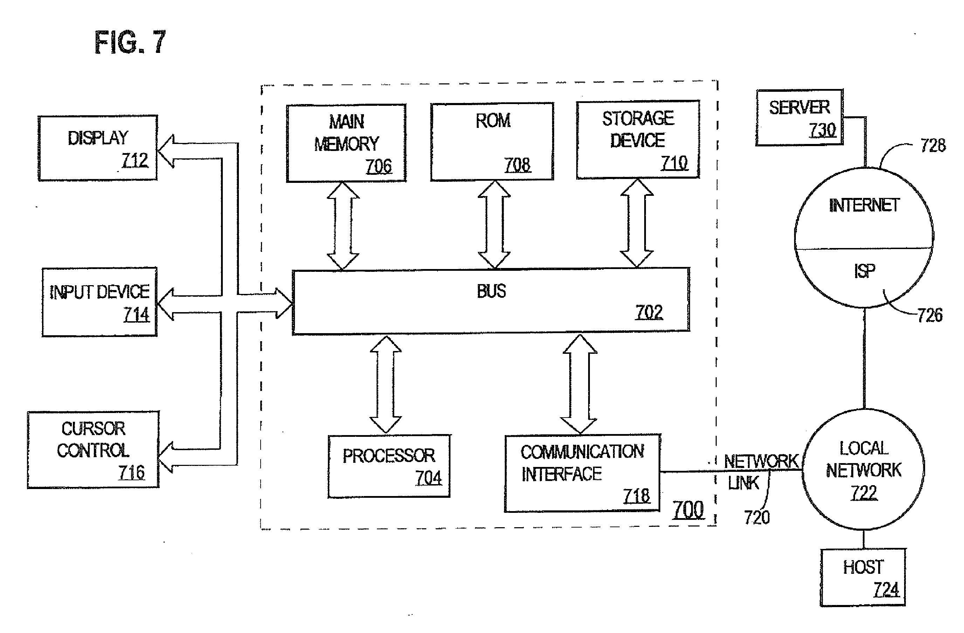

Generating print data using a multi-document print driver as described herein may be implemented on any type of computing architecture. For purposes of explanation, FIG. 7 is a block diagram that depicts an example computer system 700 upon which embodiments of the invention may be implemented. Computer system 700 includes a bus 702 or other communication mechanism for communicating information, and a processor 704 coupled with bus 702 for processing information. Computer system 700 also includes a main memory 706, such as a random access memory (RAM) or other dynamic storage device, coupled to bus 702 for storing information and instructions to be executed by processor 704. Main memory 706 also may be used for storing temporary variables or other intermediate information during execution of instructions to be executed by processor 704. Computer system 700 further includes a read only memory (ROM) 708 or other static storage device coupled to bus 702 for storing static information and instructions for processor 704. A storage device 710, such as a magnetic disk or optical disk, is provided and coupled to bus 702 for storing information and instructions.

Computer system 700 may be coupled via bus 702 to a display 712, such as a cathode ray tube (CRT), for displaying information to a computer user. An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane.

The invention is related to the use of computer system 700 for implementing the techniques described herein. According to one embodiment of the invention, those techniques are performed by computer system 700 in response to processor 704 executing one or more sequences of one or more instructions contained in main memory 706. Such instructions may be read into main memory 706 from another computer-readable medium, such as storage device 710. Execution of the sequences of instructions contained in main memory 706 causes processor 704 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing data that causes a computer to operation in a specific manner. In an embodiment implemented using computer system 700, various computer-readable media are involved, for example, in providing instructions to processor 704 for execution. Such a medium may take many forms, including but not limited to, non-volatile media and volatile media. Non-volatile media includes, for example, optical or magnetic disks, such as storage device 710. Volatile media includes dynamic memory, such as main memory 706. Common forms of computer-readable media include, for example, a floppy disk, a flexible disk, hard disk, magnetic tape, or any other magnetic medium, a CD-ROM, any other optical medium, a RAM, a PROM, and EPROM, a FLASH-EPROM, any other memory chip or memory cartridge, or any other medium from which a computer can read.

Various forms of computer-readable media may be involved in carrying one or more sequences of one or more instructions to processor 704 for execution. For example, the instructions may initially be carried on a magnetic disk of a remote computer. The remote computer can load the instructions into its dynamic memory and send the instructions over a telephone line using a modem. A modem local to computer system 700 can receive the data on the telephone line and use an infra-red transmitter to convert the data to an infra-red signal. An infra-red detector can receive the data carried in the infra-red signal and appropriate circuitry can place the data on bus 702. Bus 702 carries the data to main memory 706, from which processor 704 retrieves and executes the instructions. The instructions received by main memory 706 may optionally be stored,on storage device 710 either before or after execution by processor 704.

Computer system 700 also includes a communication interface 718 coupled to bus 702. Communication interface 718 provides a two-way data communication coupling to a network link 720 that is connected to a local network 722. For example, communication interface 718 may be an integrated services digital network (ISDN) card or a modem to provide a data communication connection to a corresponding type of telephone line. As another example, communication interface 718 may be a local area network (LAN) card to provide a data communication connection to a compatible LAN. Wireless links may also be implemented. In any such implementation, communication interface 718 sends and receives electrical, electromagnetic or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the world wide packet data communication network now commonly referred to as the "Internet" 728. Local network 722 and Internet 728 both use electrical, electromagnetic or optical signals that carry digital data streams.

Computer system 700 can send messages and receive data, including program code, through the network(s), network link 720 and communication interface 718. In the Internet example, a server 730 might transmit a requested code for an application program through Internet 728, ISP 726, local network 722 and communication interface 718. The received code may be executed by processor 704 as it is received, and/or stored in storage device 710, or other non-volatile storage for later execution.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A computer-implemented method for generating print data, the computer-implemented method comprising:
a print driver (114) retrieving first application data generated by a first application program, wherein the first application data includes first content and the first application data conforms to a first format supported by the first application program;
the print driver processing the first application data and generating first processed application data (120) that conforms to a common data format that is different than the first format;
the print driver retrieving second application data generated by a second application program, wherein the second application data includes second content and the second application data conforms to a second format supported by the second application program, wherein the second format is different than the first format and the common data format;
the print driver processing the second application data and generating second processed application data (122) that conforms to the common data format;
the print driver causing the first processed application data and the second processed application data to be presented to a user via a graphical user interface (202) and allowing a user to create edited processed application data that includes one or more portions of the first processed application data and one or more portions of the second processed application data by:
designating an order for the first content and the second content, and
deleting one or more portions of the first content and the second content; and
the print driver causing the edited processed application data to be processed and print data generated that conforms to a format supported by a print device (104).

2. The computer-implemented method as recited in Claim 1, further comprising:
the print driver storing the first processed application data in a data file in the common data format;
the print driver storing the second processed application data in the data file in the common data format; and
wherein the print driver retrieving the first processed application data includes the print driver retrieving the first processed application data from the data file and the print driver retrieving the second processed application data includes the print driver retrieving the second processed application data from the data file.

3. The computer-implemented method as recited in Claim 1, further comprising the print driver causing one or more user interface controls to be displayed on the graphical user interface that allow the user to specify one or more locations from which the first application data and the second application data are to be retrieved.

4. The computer-implemented method as recited in Claim 1, further comprising allowing a user to select particular content from the first content and the second content and move the selected particular content within the first content and the second content.

5. The computer-implemented method as recited in Claim 1, further comprising:
the print driver causing one or more user interface controls to be displayed on the graphical user interface that allow the user to specify a location to which the edited processed application data is to be stored; and
the print driver storing the edited processed application data to the location.

6. The computer-implemented method as recited in Claim 1, further comprising:
the print driver causing one or more user interface controls to be displayed on the graphical user interface that allow the user to specify one or more policies to be applied to the edited processed application data to control access to the edited processed application data.

7. The computer-implemented method as recited in Claim 1, wherein the print driver processing the edited processed application data and generating print data that conforms to a format supported by a print device includes the print driver converting one or more portions of the edited processed application data from the common data format into a particular data format supported by the print device.

8. The computer-implemented method as recited in Claim 1, wherein the print driver causing the edited processed application data to be processed and print data generated that conforms to a format supported by a print device includes the print driver invoking a second print driver to convert the one or more portions of the edited processed application data from the common data format into the particular data format supported by the print device.

9. The computer-implemented method as recited in Claim 8, further comprising the print driver causing one or more user interface objects to be displayed'that allow a user to select an installed printer to receive the print data, wherein the second print driver is the print driver associated with the installed printer selected by the user.

10. A computer-readable medium for generating print data, the computer-readable medium comprising instructions which, when processed by one or more processors, cause:
a print driver retrieving first application data generated by a first application program, wherein the first application data includes first content and the first application data conforms to a first format supported by the first application program;
the print driver processing the first application data and generating first processed application data that conforms to a common data format that is different than the first format;
the print driver retrieving second application data generated by a second application program, wherein the second application data includes second content and the second application data conforms to a second format supported by the second application program, wherein the second format is different than the first format and the common data format;
the print driver processing the second application data and generating second processed application data that conforms to the common data format;
the print driver causing the first processed application data and the second processed application data to be presented to a user via a graphical user interface and allowing a user to create edited processed application data that includes one or more portions of the first processed application data and one or more portions of the second processed application data by:
designating an order for the first content and the second content, and
deleting one or more portions of the first content and the second content; and
the print driver causing the edited processed application data to be processed and print data generated that conforms to a format supported by a print device.

11. The computer-readable medium as recited in Claim 10, further comprising one or more additional instructions which, when processed by the one or more processors, cause:
the print driver storing the first processed application data in a data file in the common data format;
the print driver storing the second processed application data in the data file in the common data format; and
wherein the print driver retrieving the first processed application data includes the print driver retrieving the first processed application data from the data file and the print driver retrieving the second processed application data includes the print driver retrieving the second processed application data from the data file.

12. The computer-readable medium as recited in Claim 10, further comprising one or more additional instructions which, when processed by the one or more processors, cause the print driver causing one or more user interface controls to be displayed on the graphical user interface that allow the user to specify one or more locations from which the first application data and the second application data are to be retrieved.

13. The computer-readable medium as recited in Claim 10, further comprising one or more additional instructions which, when processed by the one or more processors, cause allowing a user to select particular content from the first content and the second content and move the selected particular content within the first content and the second content.

14. The computer-readable medium as recited in Claim 10, further comprising one or more additional instructions which, when processed by the one or more processors, cause:
the print driver causing one or more user interface controls to be displayed on the graphical user interface that allow the user to specify a location to which the edited processed application data is to be stored; and
the print driver storing the edited processed application data to the location.

15. The computer-readable medium as recited in Claim 10, further comprising one or more additional instructions which, when processed by the one or more processors, cause:
the print driver causing one or more user interface controls to be displayed on the graphical user interface that allow the user to specify one or more policies to be applied to the edited processed application data to control access to the edited processed application data.

16. The computer-readable medium as recited in Claim 10, wherein the print driver processing the edited processed application data and generating print data that conforms to a format supported by a print device includes the print driver converting one or more portions of the edited processed application data from the common data format into a particular data format supported by the print device.

17. The computer-readable medium as recited in Claim 10, wherein the print driver causing the edited processed application data to be processed and print data generated that conforms to a format supported by a print device includes the print driver invoking a second print driver to convert the one or more portions of the edited processed application data from the common data format into the particular data format supported by the print device.

18. The computer-readable medium as recited in Claim 17, further comprising one or more additional instructions which, when processed by the one or more processors, cause the print driver causing one or more user interface objects to be displayed that allow a user to select an installed printer to receive the print data, wherein the second print driver is the print driver associated with the installed printer selected by the user.

19. An apparatus for generating print data, the apparatus comprising a memory storing instructions which, when processed by one or more processors, cause:
a print driver retrieving first application data generated by a first application program, wherein the first application data includes first content and the first application data conforms to a first format supported by the first application program;
the print driver processing the first application data and generating first processed application data that conforms to a common data format that is different than the first format;
the print driver retrieving second application data generated by a second application program, wherein the second application data includes second content and the second application data conforms to a second format supported by the second application program, wherein the second format is different than the first format and the common data format;
the print driver processing the second application data and generating second processed application data that conforms to the common data format;
the print driver causing the first processed application data and the second processed application data to be presented to a user via a graphical user interface and allowing a user to create edited processed application data that includes one or more portions of the first processed application data and one or more portions of the second processed application data by:
designating an order for the first content and the second content, and
deleting one or more portions of the first content and the second content; and
the print driver causing the edited processed application data to be processed and print data generated that conforms to a format supported by a print device.
